# EUROPÄISCHE PATENTSCHRIFT

(11) **EP 3 234 537 B1**
(45) Veröffentlichungstag und Bekanntmachung des Hinweises auf die Patenterteilung: **31.07.2019**
(21) Anmeldenummer: 15805185.4
(22) Anmeldetag: 07.12.2015
(51) Int. Cl.: G01M 3/20, G21C 17/07, G21C 19/07

(54) **VORRICHTUNG UND VERFAHREN ZUR DURCHFÜHRUNG EINER DICHTHEITSPRÜFUNG AN BRENNSTABKAPSELN**
DEVICE AND METHOD FOR PERFORMING A LEAK TEST ON FUEL ROD CAPSULES
DISPOSITIF ET PROCÉDÉ POUR RÉALISER UN TEST D'ÉTANCHÉITÉ DE CAPSULES DE BARRES DE COMBUSTIBLE

(30) Priorität: 15.12.2014 DE 102014118623
(43) Veröffentlichungstag der Anmeldung: 25.10.2017
(73) Patentinhaber: Framatome GmbH, 91052 Erlangen (DE)
(72) Erfinder: HUMMEL, Wolfgang, 92318 Neumarkt (DE)
(74) Vertreter: Schlögl, Markus
(86) Internationale Anmeldenummer: PCT/EP2015/078808
(87) Internationale Veröffentlichungsnummer: WO 2016/096499

(56) Entgegenhaltungen:
- EP-A1- 1 207 380
- WO-A1-2007/071337
- FR-A1- 2 509 898
- US-A- 3 247 706
- US-A1- 2006 283 235

## Beschreibung

Die Erfindung betrifft eine Vorrichtung zur Durchführung einer Dichtheitsprüfung an einer zumindest einen Brennstab und Prüfgas enthaltenden Brennstabkapsel, umfassend ein zur Aufnahme zumindest einer Brennstabkapsel ausgebildetes Testbehältnis, welches in ein mit Wasser geflutetes Becken einer nukleartechnischen Anlage absenkbar ist. Die Erfindung betrifft ferner ein Verfahren zur Durchführung der Dichtheitsprüfung an der zumindest einen Brennstab und Prüfgas enthaltenden Brennstabkapsel mit einer derartigen Vorrichtung.

Es ist bekannt, dass Brennstäbe von Kernreaktoren während des Betriebs undicht werden können, d.h. Wasser in diese eindringen kann. Sobald ein Brennstab mit einem derartigen Defekt identifiziert wird, wird dieser typischerweise unter Wasser in einer Brennstabkapsel eingekapselt, um ein Austreten von radioaktiven Spaltprodukten, insbesondere von radioaktiven Gasen, entgegen zu wirken. Das Einkapseln des Brennstabs erfolgt hierbei in einer ausreichenden Tiefe, so dass das Öffnen und Verschließen der Brennstabkapsel ferngesteuert mittels geeigneter Manipulatoren erfolgt. Nachdem die Brennstabkapsel geöffnet und der Brennstab eingeführt wurde, wird das in die Brennstabkapsel eingedrungene Wasser durch Einblasen eines Prüfgases verdrängt und die Brennstabkapsel in eine Einkapselungseinrichtung überführt. In dieser Einkapselungseinrichtung wird der in der Brennstabkapsel befindliche Brennstab durch Durchströmen der Brennstabkapsel mit heißem Prüfgas erhitzt und so das im Brennstab befindliche Wasser verdampft. Nachdem der Wasserdampf aus der Einkapselungseinrichtung durch Trocknen des Prüfgases oder Austausch des feuchten Gases durch trockenes Prüfgas entfernt wurde, wird die Brennstabkapsel verschlossen und an der Verschlussstelle verschweißt. Nach dem Entfernen der verschweißten und damit dichten Brennstabkapsel aus der Einkapselungseinrichtung muss diese noch auf Dichtheit überprüft werden. Die den Brennstab beinhaltende Brennstabkapsel wird dann gegebenenfalls in einem mit Wasser gefüllten Lagerbecken zwischengelagert, bevor diese zu einem Endlager oder zu einer Wiederaufbereitungsanlage transportiert werden kann.

Es ist bekannt, sowohl die Brennstäbe an sich oder die Brennstabkapsel, die zumindest einen Brennstab enthält, hinsichtlich ihrer Dichtheit zu untersuchen.

Aus der DE 195 42 330 A1 ist beispielsweise ein Verfahren zur Überprüfung der Dichtheit von Brennstäben bekannt, bei dem Gase, die aus dem Brennelement austreten, hinsichtlich ihrem Gehalt an gasförmigen Fissionsprodukten analysiert werden.

WO 2007/071337 beschreibt die Überprüfung von Brennstabkapseln, die zumindest einen Brennstab enthalten. Die Brennstabkapsel wird in ein Testbehältnis eingebracht, welches sich innerhalb eines gefluteten Beckens einer nukleartechnischen Anlage unterhalb der Wasseroberfläche befindet. Lecks werden mittels einer Unterwasserkamera erfasst, wobei eine Leckrate anhand der Anzahl und Größe der erfassten Gasblasen abgeschätzt wird.

Ausgehend von diesem Stand der Technik ist es Aufgabe der vorliegenden Erfindung, die Durchführung der Dichtheitsprüfung an Brennstabkapseln dahingehend zu verbessern, dass Leckraten besonders genau ermittelt werden können.

Hinsichtlich der Vorrichtung wird die Aufgabe gelöst durch die Vorrichtung zur Durchführung der Dichtheitsprüfung der eingangs genannten Art mit den weiteren Merkmalen des Patentanspruchs 1.

Vorteilhafte Ausführungen der Erfindung sind Gegenstand der Unteransprüche.

Eine Vorrichtung ausgelegt zur Durchführung einer Dichtheitsprüfung an einer zumindest einen Brennstab und Prüfgas enthaltenden Brennstabkapsel umfasst ein zur Aufnahme zumindest einer Brennstabkapsel ausgebildetes Testbehältnis, welches in ein mit Wasser geflutetes Becken einer nuklearen Anlage absenkbar ist. Erfindungsgemäß ist ein Massenspektrometer mit einem Inneren des Testbehältnisses derart fluidisch verbindbar, dass dem Massenspektrometer ein Gasstrom zur Erfassung einer Konzentration des aus der Brennstabkapsel in das Testbehältnis diffundierten Prüfgases zuführbar ist.

Der gesamte Vorgang der Dichtheitsprüfung ist somit, wie auch der Vorgang der Einkapselung des Brennstabs, unter Wasser durchführbar. Dazu ist das Testbehältnis im Becken, beispielsweise einem Lagerbecken eines Kernkraftwerks, abgesenkt. Die Brennstabkapsel enthält neben dem zumindest einen Brennstab Prüfgas unter einem bekannten, vorgegebenen Druck. Das Prüfgas diffundiert durch etwaig in der Brennstabkapsel vorhandene Lecks in das Innere des Testbehältnisses. Das Innere des Testbehältnisses ist mit dem Massenspektrometer durch Leitungen und gegebenenfalls dazwischen angeordneten Ventilen verbunden, so dass das Prüfgas dem Massenspektrometer zugeführt werden kann, nachdem eine fluidische Verbindung etabliert wurde. Die selektive Detektion des Prüfgases mittels des Massenspektrometers ermöglicht eine besonders genaue Bestimmung der Konzentration des im Gasstrom enthaltenen Prüfgases. Die aus der so bestimmten Konzentration des Prüfgases abgeleitete Leckrate weist daher eine erhöhte Genauigkeit auf.

Zur Dichtheitsprüfung gemäß gängiger Industrienormen kommt typischer Weise Helium als Prüfgas zum Einsatz. In dem vorliegenden Anwendungsfall hat es sich jedoch abweichend hiervon als besonders vorteilhaft erwiesen, als Prüfgas Argon vorzusehen. Das Massenspektrometer ist daher vorzugsweise dazu ausgebildet, die Konzentration des aus der Brennstabkapsel hinaus diffundierten Argons zu erfassen. Nachdem die Brennstäbe unter Wasser in Brennstabkapseln eingeschlossen werden, ist nicht auszuschließen, dass eine gewisse Restfeuchte innerhalb der Brennstabkapsel verbleibt. Entsprechendes gilt für das Testbehältnis selbst, welches typischer Weise beim Einbringen der Brennstabkapsel mit Wasser aus dem Becken geflutet wird. Das Innere der Brennstabkapsel bzw. des Testbehältnis kann daher nicht vollständig getrocknet werden, bevor die Überprüfung der Dichtheit erfolgt. Dies ist insbesondere dann problematisch, wenn eine Überprüfung der Dichtheit mittels einer massenspektrometrisch erfassten Konzentration von heraus diffundiertem Helium erfolgen soll, da Helium und der aus der Restfeuchte stammende Wasserstoff vergleichbare Atommassen haben. Die Messergebnisse sind daher mit relativ großen Ungenauigkeiten behaftet, falls Helium als Prüfgas verwendet wird. Dieses Problem kann dadurch vermieden werden, wenn innerhalb der Brennstabkapsel Argon, das eine von Wasserstoff deutlich abweichende Atommasse aufweist, als Prüfgas unter einem definierten Druck eingefüllt wird.

Alternativ dazu kann auch ein anderes Inertgas als Prüfgas Verwendung finden.

In einem bevorzugten Ausführungsbeispiel ist das Testbehältnis derart evakuierbar ausgebildet, dass im Inneren des Testbehältnisses ein gegenüber einem von dem das Testbehältnis umgebenden Wasser verursachten hydrostatischen Druck verringerter Innendruck einstellbar ist. Mit anderen Worten kann das Innere des Testbehältnisses insbesondere mittels Ventilanordnungen oder dergleichen derart vom hydrostatischen Druck der Umgebung isoliert werden, dass der Innendruck im Inneren des Testbehältnisses beispielsweise mittels Vakuumpumpen auf einen zur Dichtheitsprüfung geeigneten Wert eingestellt werden kann. Dies ist insbesondere zur Vorgabe von definierten Randbedingungen bei der Bestimmung der Leckraten wünschenswert, wobei die zwischen dem Inneren der Brennstabkapsel und dem Inneren des Testbehältnisses vorherrschende Druckdifferenz bekannt sein muss. Eine geeignete Absenkung des Innendrucks innerhalb des Testbehältnisses bezüglich des im Inneren der Brennstabkapsel vorherrschenden Drucks unterstützt die Diffusion des Prüfgases aus der Brennstabkapsel, so dass der Prüfvorgang weniger Zeit beansprucht.

Vorzugsweise weist das Testbehältnis an einem unteren Ende eine Verbindungseinrichtung zum Inneren des Beckens auf. Die Verbindungseinrichtung dient als Auslass für im Testbehältnis vorhandenes Wasser, das in dieses beim Einbringen der zumindest einen Brennstabkapsel eingedrungen ist. Hierzu ist insbesondere vorgesehen, ein Spülgas unter Druck in das Innere des Testbehältnisses einzuleiten, welches das Wasser verdrängt und durch die am tiefsten Punkt des Testbehältnisses angeordnete Verbindungseinrichtung in das Becken ausstößt. Dazu kann die Förderung des Spülgases zum Testbehältnis beispielsweise mittels einer Vakuumpumpe mit entsprechender Förderleistung erfolgen. Eine weitgehende Entleerung des Testbehältnisses von Wasser ist insbesondere bei Ausführungsbeispielen, die Argon als Prüfgas verwenden, wünschenswert. Argon weist eine vergleichsweise gute Wasserlöslichkeit auf, so dass im Testbehältnis verbleibendes Restwasser die Messergebnisse maßgeblich beeinflussen und verfälschen kann.

Besonders bevorzugt ist das obere Ende des Testbehältnisses mit einem ersten Reservoir, in welchem Spülgas unter Druck bevorratbar ist, fluidisch verbindbar ist. Das Spülgas steht im ersten Reservoir unter einem derartig großen Druck, dass ein mit Wasser gefülltes Testbehältnis vollständig mit Spülgas geflutet werden kann, indem eine fluidische Verbindung zwischen dem ersten Reservoir und dem Testbehältnis beispielsweise durch Öffnen von Ventilen bereitgestellt wird. Dazu ist notwendig, dass der Druck innerhalb des ersten Reservoirs größer ist als der hydrostatische Druck, der von dem das Testbehältnis umgebenden Wasser erzeugt wird. Eine derartig ausgebildete Vorrichtung weist eine besonders einfache und robuste Bauweise auf, da wartungsintensive Fördereinrichtungen, insbesondere Vakuumpumpen, zur Förderung des Spülgases vermieden werden.

Das erste Reservoir ist vorzugsweise mit einer Entnahmestelle des Massenspektrometers fluidisch verbindbar. Somit ist ermöglicht, Leitungen, die den Gasstrom zum Massenspektrometer führen, mit Spülgas zu spülen und gegebenenfalls zu trocken.

In Weiterbildung der Erfindung ist ein zweites Reservoir vorgesehen, in welchem Testgas unter Druck bevorratbar ist. Das zweite Reservoir kann ebenfalls beispielsweise über eine geeignete Ventilstellung mit der Entnahmestelle fluidisch verbunden werden. Hierbei erfolgt die Zufuhr zur Entnahmestelle zu Zwecken der Kalibrierung des Massenspektrometers. Das Testgas ist im zweiten Reservoir unter bekanntem Druck bevorratet und zur Entnahmestelle kontrolliert zuführbar, so dass die Kalibrierung des Massenspektrometers unter definierten Bedingungen erfolgt. Das Testgas umfasst Spülgas mit einem kleinen Anteil von Prüfgas. Die Konzentration des im Spülgas enthaltenen Prüfgas liegt dabei geringfügig oberhalb der Nachweisgrenze des Massenspektrometers, so dass dieser durch kontrollierte Zufuhr von Testgas kalibriert werden kann.

Vorzugsweise ist zwischen der Entnahmestelle und dem ersten Reservoir und/oder zwischen der Entnahmestelle und dem zweiten Reservoir zumindest ein Volumenregelventil, um den Volumenstrom des Spülgases oder Testgases einzustellen. Mittels des zumindest einen Volumenregelventils für das Testgas ist der Volumenstrom so variierbar und auf Werte einstellbar, so dass eine präzise Kalibrierung des Massenspektrometers sichergestellt ist.

Ferner kann die am unteren Ende des Testbehältnisses vorgesehene Verbindungseinrichtung in einem bevorzugten Ausführungsbeispiel zudem zum kontrollierten Fluten des Testbehältnisses mit Wasser aus dem Becken dienen. In diesem Ausführungsbeispiel ist das Innere des Testbehältnisses an einem oberen Ende mit einer Entnahmestelle des Massenspektrometers beispielsweise mittels Ventilanordnungen oder dergleichen derart fluidisch verbindbar, dass ein Fördern der im Testbehältnis vorhandenen Gassäule zur Entnahmestelle mittels Einbringen von Wasser durch die Verbindungseinrichtung ermöglicht ist. Gemäß dieser Ausführung ist somit ermöglicht, den hydrostatischen Druck des umgebenden Wassers zu nutzen, um eine im Testbehältnis vorhandene und im Falle eines Lecks Prüfgas enthaltende Gassäule praktisch vollständig dem Massenspektrometer dadurch zuzuführen, dass das Testbehältnis kontrolliert mit Wasser aus dem Becken geflutet wird.

In einem konkreten Ausführungsbeispiel umfasst die Verbindungseinrichtung zum kontrollierten Fluten des Testbehältnisses eine Gasaustauscheinrichtung. Die Gasaustauscheinrichtung umfasst einen inneren Behälter, über den zweiter Behälter gestülpt ist. Im inneren Behälter befindet sich Wasser aus dem Becken, das mitunter gelöstes Argon enthalten kann. Beim Ausblasen des Testbehältnisses mit Spülgas, insbesondere Stickstoff, wird in den inneren Behälter Spülgas eingeblasen, wodurch ein Gasaustausch im Wasser erfolgt. Hierbei kann insbesondere Argon größten Teils durch Stickstoff ersetzt werden. Durch das Einblasen von Spülgas in den inneren Behälter wird der umgebende zweite Behälter mit Spülgas gefüllt. Dies hat zur Folge, dass durch den äußeren Behälter eine hermetische Trennung zum umgebenden Becken vorliegt. Die Volumina des ersten und des zweiten Behälters können so dimensioniert werden, dass während des Rückströmvorgangs (Messphase) des im inneren Behälter befindlichen Wassers in das Testbehältnis kein Wasser aus dem Becken über den äußeren Behälter zum inneren Behälter vordringt, bevor der Wasserspiegel im Testbehälter das Niveau des Beckenwasserspiegels erreicht. Dies ist insbesondere dann sinnvoll, wenn Argon als Prüfgas verwendet wird, da gelöstes Argon immer im Wasser vorhanden sein kann.

Vorzugsweise ist ein Volumenstrom des der Entnahmestelle des Massenspektrometers zugeführten Gasstroms mittels einer Stelleinrichtung, beispielsweise mittels zumindest eines weiteren Volumenregelventils oder einer Vakuumpumpe, veränderbar, insbesondere steuer- oder regelbar. Die Entnahme an der Entnahmestelle erfolgt somit vorzugsweise bei konstantem Druck, um eine Verfälschung der Messergebnisse zu vermeiden. Zur Steuer- bzw. Regelung des Druckes an der Entnahmestelle ist die Pumpenleistung der Vakuumpumpe und/oder der Durchlass des Volumenregelventils entsprechend variierbar.

Besonders bevorzugt ist die Stelleinrichtung, insbesondere das weitere Volumenregelventil oder die Vakuumpumpe, mit einem Drucksensor zur Messung des Druckes an der Entnahmestelle verbunden.

Gemäß einem möglichen Ausführungsbeispiel ist das Testbehältnis zur Aufnahme von lediglich einer einzelnen Brennstabkapsel ausgebildet. In einem dazu alternativen Ausführungsbeispiel ist das Testbehältnis derart dimensioniert, dass mehrere Brennstabkapseln aufgenommen werden können.

Vorzugsweise ist die zumindest eine Brennstabkapsel in das Testbehältnis über eine endseitig angeordnete verschließbare Öffnung einbringbar. Zum Verschluss der Brennstabkapsel können Schraubverbindungen Einsatz finden, üblich sind jedoch auch insbesondere stoffschlüssige Schweißverbindungen.

Zur präzisen Bestimmung der Leckrate ist eine möglichst genaue Kenntnis der übrigen Zustandsgrößen, insbesondere der Temperatur, wünschenswert. Bevorzugt sind daher Temperatursensoren an verschiedenen Komponenten der Vorrichtung zur Erfassung der Temperatur vorgesehen.

Gemäß möglicher Ausführungen der Erfindung umfasst die Vorrichtung Komponenten, insbesondere Leitungen und/oder Leitungsabschnitte, die innerhalb des Beckens unter Wasser angeordnet sind, und solche, die außerhalb des Beckens angeordnet sind. Auf Grund der Nachzerfallsleistung des Brennstoffs herrscht innerhalb des Beckens eine geringfügig erhöhte und nahezu konstante Temperatur von etwa 30° C bis 40° C vor. Die außerhalb des Beckens angeordneten Komponenten weisen daher auf Grund der kühleren Umgebung oftmals eine geringere Temperatur auf, die eine Kondensation des Gasstroms begünstigt, während dieser der Entnahmestelle zugeführt wird. Eine derartige Kondensation kann jedoch die Messergebnisse verfälschen. Vorzugsweise herrscht daher im gesamten Bereich der Vorrichtung eine möglichst konstante Temperatur vor. Um dies sicherzustellen, sind die außerhalb des Beckens angeordneten Komponenten der Vorrichtung zumindest abschnittsweise mit einer wärmedämmenden Isolierung versehen.

In Weiterbildung der Erfindung ist eine Heizeinrichtung vorgesehen, mittels derer die außerhalb des Beckens angeordneten Komponenten zumindest abschnittsweise beheizbar sind. Dadurch werden die auftretenden Temperaturgradienten zumindest verringert, um eine Kondensation insbesondere im Bereich der Entnahmestelle zu unterbinden. Die Temperatur an der Entnahmestelle ist vorzugsweise mittels der Heizeinrichtung auf die im Becken vorliegende Temperatur einzustellen.

Hinsichtlich des Verfahrens wird die Aufgabe gelöst durch ein Verfahren zur Durchführung einer Dichtheitsprüfung der eingangs genannten Art mit den zusätzlichen Merkmalen des Patentanspruchs 15.

Bei dem Verfahren zur Durchführung der Dichtheitsprüfung an der zumindest einen Brennstab und Prüfgas enthaltenden Brennstabkapsel wird eine der vorstehend beschriebenen Vorrichtungen verwendet, so dass zunächst auf die bisherigen Ausführungen verwiesen wird.

Zur Überprüfung der Dichtheit wird die zumindest eine Brennstabkapsel in das im gefluteten Becken einer nuklearen Anlage abgesenkte Testbehältnis eingebracht. Erfindungsgemäß wird der das aus der Brennstabkapsel in das Testbehältnis diffundierte Prüfgas enthaltende Gasstrom einem Massenspektrometer zugeführt. Ferner wird im Gasstrom mittels des Massenspektrometers eine Konzentration des aus der Brennstabkapsel in das Testbehältnis diffundierten Prüfgases zur Ermittlung der Leckrate erfasst.

Hierzu ist insbesondere vorgesehen, die Leckrate indirekt zu ermitteln. Zum Nachweis, dass eine zulässige Leckrate nicht überschritten wurde, muss die erfasste Konzentration des Prüfgases nach Ablauf einer zuvor festgelegten Messdauer (Freisetzungsdauer des Prüfgases in das Testbehältnis) unter einem vorgegebenen Schwellwert verbleiben, wobei sichergestellt werden muss, dass die zu messende Konzentration des Prüfgases oberhalb der Nachweisgrenze des Massenspektrometers liegt.

Im Falle, dass Argon als Prüfgas verwendet wird, liegt die Nachweisgrenze des Massenspektrometers typischerweise zwischen 10 ppb (Teile pro Milliarde) und 1 ppm (Teile pro Million).

Vorzugsweise wird die zumindest eine Brennstabkapsel unter Wasser in das Testbehältnis eingebracht und das in das Testbehältnis eingedrungene Wasser durch ein Spülgas ersetzt. Dazu wird das Spülgas unter Druck in das Testbehältnis eingeleitet.

Das Spülgas verbleibt vorzugsweise für eine vorgebbare Zeitspanne im Testbehältnis, bevor der das Spülgas und das aus der Brennstabkapsel hinaus diffundierte Prüfgas enthaltende Gasstrom dem Massespektrometer zugeführt wird. Bei gegebenen Randbedingungen, welche die an den einzelnen Komponenten vorherrschenden Drücke und Temperaturen umfassen, kann die Leckrate aus der erfassten Konzentration bestimmt werden und die untersuchte Brennstabkapsel hinsichtlich ihrer Dichtheit klassifiziert werden.

In einem besonders bevorzugten Ausführungsbeispiel wird das Testbehältnis zur Erzeugung des Gasstroms mit Wasser aus dem Becken geflutet. Das Testbehältnis wird insbesondere nach Ablauf der vorgebbaren Zeitspanne kontrolliert geflutet, um den Prüfgas enthaltenden Gasstrom der Entnahmestelle zuzuführen.

Vorzugsweise wird der der Entnahmestelle des Massenspektrometers zugeführte Gasstrom hinsichtlich seines Volumens derart geregelt, dass an der Entnahmestelle ein konstanter Druck vorherrscht.

In einem bevorzugten Ausführungsbeispiel wird der Entnahmestelle ein Prüfgas und Spülgas umfassendes Gasgemisch in einem vorgegebenen Mischungsverhältnis kontrolliert zugeführt. Die Zuführung des Gasgemisches im vorgegebenen Mischungsverhältnis kann vor Inbetriebnahme des Massenspektrometers zur Zwecken der Kalibrierung des Massenspektrometers erfolgen.

Komponenten der Vorrichtung, insbesondere Leitungen und/oder Leitungsabschnitte, die außerhalb des Beckens angeordnet sind, werden vorzugsweise zumindest abschnittsweise während des Betriebs beheizt. Dadurch kann dem Auftreten von relativ großen Temperaturgradienten, die eine Kondensation im Gasstrom begünstigen, entgegengewirkt werden.

Als Prüfgas kann ein Inertgas zur Anwendung kommen. Besonders bevorzugt wird als Prüfgas Argon verwendet. Falls die Kapselung der Brennstäbe in die Brennstabkapseln im gleichen Becken der nukleartechnischen Anlage erfolgt, so ist vorgesehen, die Kapselung und die Dichtheitsprüfung innerhalb des Beckens an verschiedenen Orten durchzuführen. Grund hierfür ist, dass Argon eine relativ gute Wasserlöslichkeit aufweist. Daher können die Messergebnisse von einer im Testbehältnis verbleibenden und Argon enthaltenden Restfeuchte verfälscht werden. Durch eine räumliche Trennung der die Kapselung und die Dichtheitsprüfung umfassenden Vorgänge wird dieser Effekt zumindest minimiert.

Vorzugsweise wird das Wasser aus dem Testbehältnis möglichst vollständig entfernt. Dies kann beispielsweise dadurch erfolgen, dass als Spülgas Stickstoff mit hoher Güte verwendet wird.

Im Folgenden werden mögliche Ausführungsbeispiele der Erfindung mit Bezug auf die Zeichnungen näher erläutert. Dabei zeigen:
- Fig. 1:: eine Vorrichtung zur Durchführung einer Dichtheitsprüfung an einer zumindest einen Brennstab und Prüfgas enthaltenden Brennstabkapsel gemäß einem ersten Ausführungsbeispiel der Erfindung,
- Fig. 2:: eine Vorrichtung zur Durchführung einer Dichtheitsprüfung an einer zumindest einen Brennstab und Prüfgas enthaltenden Brennstabkapsel gemäß einem zweiten Ausführungsbeispiel der Erfindung.

Einander entsprechende Teile sind in allen Figuren mit den gleichen Bezugszeichen versehen.

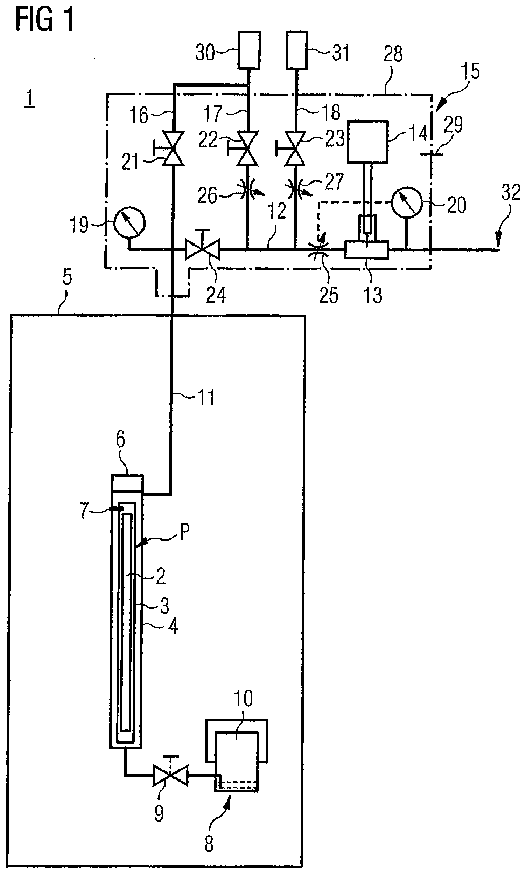

Figur 1 zeigt den schematischen Aufbau einer Vorrichtung 1 zur Durchführung einer Dichtheitsprüfung an einer zumindest einen Brennstab 2 und Prüfgas P enthaltenden Brennstabkapsel 3 gemäß einem ersten Ausführungsbeispiel der Erfindung.

In dem gezeigten Beispiel ist die Brennstabkapsel 3 mit Argon als Prüfgas P gefüllt. Innerhalb der Brennstabkapsel 3 liegt ein Innendruck von etwa 2,5 bis 3,5 bar vor.

Die Brennstabkapsel 3 ist ein Testbehältnis 4 eingebracht, das sich in einem Becken 5 einer nukleartechnischen Anlage befindet. Das Becken 5 ist mit Wasser gefüllt und das Testbehältnis 4 ist unterhalb der Wasseroberfläche im Becken 5 abgesenkt.

Das Testbehältnis 4 weist endseitig eine verschließbare Öffnung 6 auf, durch die die Brennstabkapsel 3 in das Testbehältnis 4 unter Wasser eingebracht werden kann. Im Bereich der verschließbaren Öffnung 6 ist ein erster Temperatursensor 7 zur Messung der Temperatur innerhalb des Testbehältnisses 4 angeordnet.

Am unteren Ende des Testbehältnisses 4 ist eine Verbindungseinrichtung 8 vorgesehen, die eine Verbindung zum Inneren des Beckens bereitstellt. In dem in Figur 1 gezeigten Ausführungsbeispiel umfasst die Verbindungseinrichtung 8 ein Ventil 9 und eine Gasaustauscheinrichtung 10. Die Verbindungseinrichtung 8 zum Inneren des Beckens 5 dient als Auslass für Wasser, das innerhalb des Testbehältnisses 4 eingedrungen ist. Ferner ermöglicht die Verbindungseinrichtung 8 ein kontrolliertes Fluten des Testbehältnisses 4 mit Wasser aus dem Becken 5, um eine innerhalb des Testbehältnisses 4 befindliche Gassäule über Leitungen 11, 12 in Richtung einer Entnahmestelle 13 für ein Massenspektrometer 14 zu fördern.

Die Vorrichtung 1 umfasst Komponenten, die einer Analyseeinheit 15 zugeordnet sind, welche außerhalb des Beckens 5 angeordnet sind. Die der Analyseeinheit 15 zugeordneten Komponenten umfassen insbesondere Leitungen 12, 16, 17, 18 und einen Abschnitt der Leitung 11. Ferner umfasst die Analyseeinheit 15 Drucksensoren 19, 20, Ventile 21, 22, 23, 24, Volumenregelventile 25, 26, 27, die Entnahmestelle 13 und das Massenspektrometer 14. Die Komponenten der Analyseeinheit 15 sind mit einer wärmeisolierenden Isolierung 28 versehen, um insbesondere einer Kondensation im Gasstrom während der Durchführung der Dichtheitsprüfung entgegenzuwirken. Ein zweiter Temperatursensor 29 ist zur Erfassung der Temperatur innerhalb der Analyseeinheit 15 vorgesehen.

Das am Einlass zur Entnahmestelle 13 angeordnete Volumenregelventil 25 ist mit dem Druckmesssensor 20 verbunden (gestrichelt dargestellt). Mittels des Volumenregelventils 25 und dem Druckmesssensor 20 ist der Druck an der Entnahmestelle derart steuer- und insbesondere regelbar, dass die Zuführung des Gasstroms zum Massenspektrometer 14 bei im Wesentlichen konstantem Druck erfolgt.

In einem ersten Reservoir 30 ist Spülgas, in dem dargestellten Beispiel Stickstoff, unter Druck bevorratet. Ein weiteres, zweites Reservoir 31 enthält Testgas, in dem hier gezeigten Beispiel Stickstoff mit geringem Anteil von Argon als Prüfgas P, unter Druck. Über die Leitungen 12, 17, 18 ist der Entnahmestelle 13 Spül- oder Testgas insbesondere zur Spülung oder Kalibrierung des Massenspektrometers 14 zuführbar. Hierzu kann der Volumenstrom des Spül- und Testgases mittels der Volumenregelventile 22, 23 eingestellt werden.

Das Verfahren zur Durchführung der Dichtheitsprüfung an der Brennstabkapsel 3 erfolgt unter Verwendung der in Figur 1 gezeigten Vorrichtung 1 wie folgt:
Zunächst werden alle Ventile 9, 21, 22, 23, 24 geschlossen und die Gasaustauscheinrichtung 10 mit Wasser gefüllt. Anschließend wird die endseitige Öffnung 6 des Testbehältnisses 4 geöffnet und die Brennstabkapsel 3 unter Wasser in das Testbehältnis 4 eingebracht. Die Öffnung 6 des Testbehältnisses 4 wird daraufhin wieder geschlossen und das in das Testbehältnis 4 eingedrungene Wasser weitgehend entfernt. Dies erfolgt durch Öffnen der Ventile 9, 21 und Einspeisung von Spülgas aus dem ersten Reservoir 30. Das im Testbehältnis 4 befindliche Wasser wird somit verdrängt und über die Verbindungseinrichtung 8 in das Becken ausgestoßen. Um die innenseitige Benetzung des Testbehältnisses 4 mit Wasser hinreichend zu reduzieren, wird das Testbehältnis 4 ausreichend mit Spülgas gespült. Überschüssiges Spülgas verlässt die Vorrichtung 1 über die Verbindungseinrichtung 8. Beim Spülen wird Spülgas in einen inneren Wasser enthaltenden ersten Behälter der Gasaustauscheinrichtung 10 eingeleitet. Dabei erfolgt ein Gasaustausch von im Wasser gelösten Gasen. Insbesondere kann so gelöstes Argon durch Stickstoff ersetzt werden. Darüber hinaus wird beim Spülen ein den ersten Behälter umgebenden zweiten Behälter der Gasaustauscheinrichtung 10 zumindest teilweise mit Spülgas gefüllt. Die ersten und zweiten Behälter der Gasaustauscheinrichtung 10 sind dabei derart dimensioniert, dass beim Fluten des Testbehältnisses 4 kein Wasser aus dem Becken 5 in das Testbehältnis einströmt.

Anschließend werden die Ventile 9, 21 geschlossen. In einem Dombereich der Gasaustauscheinrichtung 10 verbleibt eine Gasvorlage, welche ein Überströmen von Wasser aus dem Becken 5 verhindert. Das in der Gasaustauscheinrichtung 10 befindliche Wasser ist weitestgehend frei von Luft und/oder Argon. Nach Öffnen des Ventils 24 wird der Innendruck innerhalb des Testbehältnisses 4 reduziert. In dem hier gezeigten Beispiel wird der Innendruck auf etwa 1 bar eingestellt. Das Ventil 24 wird daraufhin wieder geschlossen.

Um einer Zunahme der Konzentration von Prüfgas P im Testbehältnis 4 zu bewirken, wird eine vorgebbare Zeitspanne, in dem hier exemplarischen Fall 1 Stunde, abgewartet, bevor die im Testbehältnis 4 befindliche Gassäule dem Massespektrometer 14 zur Analyse zugeführt wird. Während dieser Zeitspanne wird das Ventil 22 geöffnet und die Leitung 12 mit Spülgas gespült, so dass keine Luft von außen über einen endseitigen Auslass 32 der Leitung 12 eindringen kann.

Das an der Zuführung für Spülgas vorgesehene Volumenregelventil 22 ist so eingestellt, dass eine Ausregelung über das am Einlass zur Entnahmestelle 13 angeordnete Volumenregelventil 25 erfolgen kann. Insbesondere wird der Gasstrom derart eingeregelt, dass der vom Drucksensor 20 gemessene Druck auf nahezu konstantem Niveau verbleibt, während das Massenspektrometer 14 in Betrieb genommen wird.

Während der vorgebbaren Zeitspanne, die primär zur Akkumulierung von Prüfgas P innerhalb des Testbehältnisses 4 dient, erfolgt vorzugsweise die Kalibrierung des Massenspektrometers 14. Hierzu wird zunächst das Ventil 23 geöffnet bevor das Ventil 22 geschlossen wird. Die Entnahmestelle 13 steht dann mit dem zweiten Reservoir 31, in welchem Prüfgas P unter Druck bevorratet ist, in einer fluidischen Verbindung. Hierbei wird das Volumenregelventil 23 so eingestellt, dass eine Ausregelung mittels des weiteren Volumenregelventils 25 derart erfolgen kann, dass an der Entnahmestelle 13 im Wesentlichen ein konstanter Druck anliegt.

Nach Kalibrierung des Massenspektrometers 13 wird zunächst das Ventil 22 wieder geöffnet, bevor das Ventil 23 geschlossen wird. Nach Ablauf der vorgebbaren Zeitspanne werden die Ventile 9, 24 geöffnet und Ventil 22 geschlossen, um Wasser aus dem Becken 5 über die Gasaustauscheinrichtung 10 in das Testbehältnis 4 einströmen zu lassen. Das Wasser strömt aufgrund des hydrostatischen Drucks in das Testbehältnis 4 und transportiert die im Testbehältnis 4 befindliche Gassäule in Richtung der Entnahmestelle 13. Das Massenspektrometer 14 erfasst die Konzentration von Prüfgas P, hier Argon, im Gasstrom. Hierbei ist die Trägheit des Messsystems, d. h. die minimale Messzeit, zu beachten. Der Volumenstrom wird daher so ausgeregelt, dass ein gleichbleibender Druck an der Entnahmestelle 13 vorliegt. Aus der erfassten Konzentration wird die Leckrate unter Einbeziehung der gemessenen Drücke und Temperaturen berechnet.

Nach der Messung wird das Ventil 24 wieder geschlossen, das Testbehältnis 4 geöffnet und die Brennstabkapsel 3 wieder entnommen.

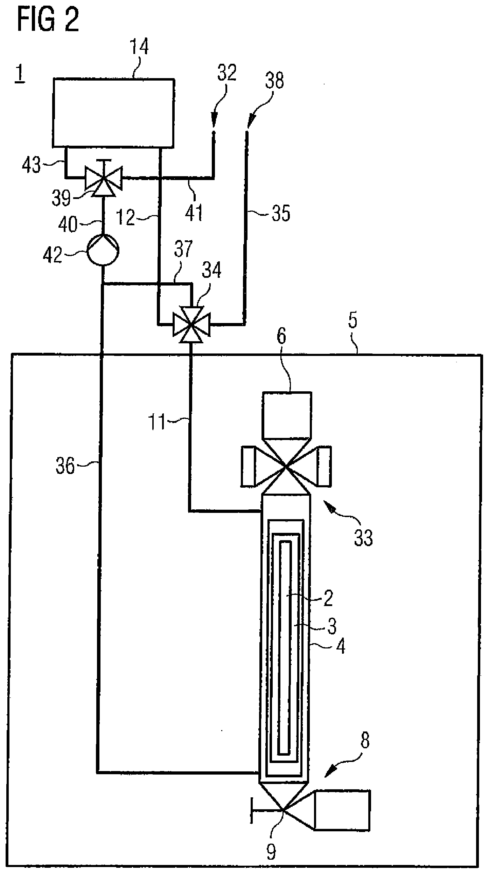

Figur 2 zeigt eine Vorrichtung 1 zur Durchführung einer Dichtheitsprüfung gemäß einem zweiten Ausführungsbeispiel der Erfindung. Die Funktionsweise des gezeigten Ausführungsbeispiels entspricht im Wesentlichen der Vorrichtung des ersten Ausführungsbeispiels, so dass zunächst auf die diesbezügliche Beschreibung verwiesen wird.

Das in Figur 2 gezeigte Ausführungsbeispiel weist eine Vakuumpumpe 42 zum Zuführen des Gasstroms zum Massenspektrometer 14 auf. Ferner sind Ventile 33, 34, 43 vorgesehen, die zur Bereitstellung von fluidischen Verbindungen zwischen Leitungen 11, 12, 35, 36, 37, 40, 41, 43 als Kugelventile ausgebildet sind.

Das Verfahren zur Durchführung der Dichtheitsprüfung erfolgt unter Verwendung der in Figur 2 dargestellten Vorrichtung 1 des zweiten Ausführungsbeispiels wie folgt:
Zunächst wird die Brennstabkapsel 3 über die endseitige Öffnung 6 in das Testbehältnis 4 eingebracht. Hierzu ist das als Kugelventil ausgebildete Ventil 33 in Richtung des Testbehältnisses 4 geöffnet. Ebenfalls ist das Ventil 9 in Durchlassrichtung geöffnet. Die in das Testbehältnis 4 eingebrachte Brennstabkapsel 3 erstreckt sich bis kurz unterhalb des Ventils 33.

Anschließend wird das beim Einsetzen der Brennstabkapsel 3 in das Testbehältnis 4 eingedrungene Wasser aus dem Testbehältnis 4 ausgetrieben. Hierzu wird zunächst das Ventil 33 geschlossen und das Ventil 9 geöffnet. An einem Einlass 38 wird ein das Spülgas unter Druck enthaltendes Reservoir, insbesondere eine Gasflasche, angeschlossen. Das Ventil 34 wird so eingestellt, dass die Leitung 35 und die Leitung 12 miteinander fluidisch verbunden sind. Daraufhin wird das Wasser durch Einblasen von Spülgas, insbesondere Stickstoff, aus dem Testbehältnis 4 über die Verbindungseinrichtung 8 in das Becken 5 ausgetrieben. Die Leitung 35 wird anschließend über die Leitung 37 und durch Umschalten des Ventils 34 mit der Leitungen 35 fluidisch verbunden. Die Leitungen 34, 36 werden ebenfalls durch Einblasen von Spülgas freigeblasen. Wenn das Testbehältnis 4 bzw. die Leitungen 34, 35, 36, 37 nur noch geringfügige Restmengen an Wasser enthalten, wird das Ventil 9 geschlossen.

Zur Erzeugung eines Unterdrucks im Testbehältnis 4 wird zunächst das Ventil 34 derart eingestellt, dass eine fluidische Verbindung zwischen den Leitungen 11, 12 bereitgestellt wird. Entsprechend wird das Ventil 39 so eingestellt, dass eine Verbindung der Leitungen 40, 41 erfolgt. Danach wird die Vakuumpumpe 42 in Betrieb genommen. Nach Erreichen des erforderlichen Differenzdruckes zwischen dem Inneren der Brennstabkapsel 3 und dem Inneren des Testbehältnisses 4 wird die Evakuierung abgestellt und das Ventil 39 derart geschaltet, dass die Leitungen 40, 43 miteinander fluidisch verbunden sind.

Die Vakuumpumpe 42 wird auch nach Erreichen des erforderlichen Unterdrucks innerhalb des Testbehältnisses 4 weiter betrieben, um stetig Spülgas mit möglicherweise freigesetzten Anteilen des Prüfgases vom Testbehältnis 4 zum Massenspektrometer 14 und wieder zurück zu fördern. Mittels des Massenspektrometers 14 wird der geförderte Gasstrom hinsichtlich der enthaltenen Anteile von Prüfgas analysiert. Aus der gemessenen Konzentration und der Prüfzeit wird dann die Leckrate unter Einbeziehung der übrigen Zustandsgrößen ermittelt.

Die Erfindung wurde vorstehend mit Bezug auf bevorzugte Ausführungsbeispiele beschrieben. Es versteht sich jedoch, dass die Erfindung nicht auf die konkrete Ausgestaltung der gezeigten Ausführungsbeispiele beschränkt ist, vielmehr kann der zuständige Fachmann anhand der Beschreibung Variationen ableiten ohne von dem wesentlichen Grundgedanken der Erfindung abzuweichen.

**Bezugszeichen liste**

| | | | |
|---|---|---|---|
| 1 | Vorrichtung | 23 | Ventil |
| 2 | Brennstab | 24 | Ventil |
| 3 | Brennstabkapsel | 25 | Volumenregelventil |
| 4 | Testbehältnis | 26 | Volumenregelventil |
| 5 | Becken | 27 | Volumenregelventil |
| 6 | Öffnung | 28 | Isolierung |
| 7 | Temperatursensor | 29 | Temperatursensor |
| 8 | Verbindungseinrichtung | 30 | Reservoir |
| 9 | Ventil | 31 | Reservoir |
| 10 | Gasaustauscheinrichtung | 32 | Auslass |
| 11 | Leitung | 33 | Ventil |
| 12 | Leitung | 34 | Ventil |
| 13 | Entnahmestelle | 35 | Leitung |
| 14 | Massenspektrometer | 36 | Leitung |
| 15 | Analyseeinheit | 37 | Leitung |
| 16 | Leitung | 38 | Einlass |
| 17 | Leitung | 39 | Ventil |
| 18 | Leitung | 40 | Leitung |
| 19 | Drucksensor | 41 | Leitung |
| 20 | Drucksensor | 42 | Vakuumpumpe |
| 21 | Ventil | 43 | Leitung |
| 22 | Ventil | P | Prüfgas |

## Patentansprüche

1. Vorrichtung (1) ausgelegt zur Durchführung einer Dichtheitsprüfung an einer zumindest einen Brennstab (2) und Prüfgas (P) enthaltenden Brennstabkapsel (3) unter Wasser, umfassend ein zur Aufnahme zumindest einer Brennstabkapsel (3) ausgebildetes Testbehältnis (4), welches in ein mit Wasser geflutetes Becken (5) einer nukleartechnischen Anlage absenkbar ist, **dadurch gekennzeichnet, dass** ein Massenspektrometer (14) mit einem Inneren des Testbehältnisses (4) derart fluidisch verbunden ist, dass dem Massenspektrometers (14) ein Gasstrom zur Erfassung einer Konzentration des aus der Brennstabkapsel (3) in das Testbehältnis (4) diffundierten Prüfgases (P) zuführbar ist.

2. Vorrichtung (1) nach Anspruch 1, **dadurch gekennzeichnet, dass** als Prüfgas (P) Argon vorgesehen ist und der Massenspektrometer (14) die Konzentration des aus der Brennstabkapsel (3) hinaus diffundierten Argons erfasst.

3. Vorrichtung (1) nach Anspruch 1 oder 2, **dadurch gekennzeichnet, dass** das Testbehältnis (4) derart evakuierbar ist, dass im Inneren des Testbehältnisses (4) ein gegenüber einem von dem das Testbehältnis (4) umgebenden Wasser verursachten hydrostatischen Druck verringerter Innendruck einstellbar ist.

4. Vorrichtung (1) nach einem der vorhergehenden Ansprüche, **dadurch gekennzeichnet, dass** das Testbehältnis (4) an einem unteren Ende eine Verbindungseinrichtung (8) zum Inneren des Beckens (5) aufweist.

5. Vorrichtung (1) nach Anspruch 4, **dadurch gekennzeichnet, dass** die Verbindungseinrichtung (8) im Becken (5) in einer Tiefe unterhalb einer Wasseroberfläche liegt und ein oberes Ende des Testbehältnisses (4) mit einem ersten Reservoir (30) fluidisch verbunden ist, in welchem ein Spülgas unter Druck bevorratbar ist, der größer ist, als der zu der Tiefe der Verbindungseinrichtung (8) korrespondierende hydrostatische Druck des umgebenden Wassers, wobei das erste Reservoir (30) insbesondere mit einer Entnahmestelle (13) des Massenspektrometers (14) fluidisch verbunden ist und/oder die Entnahmestelle (13) des Massenspektrometers (14) insbesondere mit einem zweiten Reservoir (31), in welchem Prüfgas (P) unter Druck bevorratbar ist, fluidisch verbunden ist und zwischen der Entnahmestelle (13) und dem ersten Reservoir (30) und/oder zwischen der Entnahmestelle (13) und dem zweiten Reservoir (31) insbesondere zumindest ein Volumenregelventil (22, 23, 25) angeordnet ist.

6. Vorrichtung (1) nach einem der Ansprüche 4 oder 5, **dadurch gekennzeichnet, dass** das Innere des Testbehältnis (5) am oberen Ende mit einer Entnahmestelle (13) des Massenspektrometers (14) derart fluidisch verbunden ist, dass eine im Testbehältnis (4) vorhandene Gassäule durch Einbringen von Wasser durch die am unteren Ende des Testbehältnisses angeordnete Verbindungseinrichtung (8) zur Entnahmestelle (13) förderbar ist.

7. Vorrichtung (1) nach einem der vorhergehenden Ansprüche, **dadurch gekennzeichnet, dass** ein Volumenstrom des der Entnahmestelle (13) des Massenspektrometers (14) zugeführten Gasstroms mittels einer Stelleinrichtung, insbesondere mittels zumindest eines weiteren Volumenregelventils (25) oder einer Vakuumpumpe (42), veränderbar ist, wobei die Stelleinrichtung insbesondere mit einem Drucksensor (20) zur Messung des Druckes an der Entnahmestelle verbunden ist.

8. Vorrichtung (1) nach einem der vorhergehenden Ansprüche, **dadurch gekennzeichnet, dass** die zumindest eine Brennstabkapsel (3) in das Testbehältnis (4) über eine endseitig angeordnete verschließbare Öffnung (6) einbringbar ist.

9. Vorrichtung (1) nach einem der vorhergehenden Ansprüche, **dadurch gekennzeichnet, dass** Komponenten der Vorrichtung (1), insbesondere Leitungen (12, 16, 17, 18) und/oder Leitungsabschnitte (11), die außerhalb des Beckens angeordnet sind, zumindest abschnittsweise eine wärmedämmende Isolierung (28) aufweisen und insbesondere mittels einer Heizeinrichtung zumindest abschnittsweise beheizbar sind.

10. Verfahren zur Durchführung einer Dichtheitsprüfung an einer zumindest einen Brennstab (2) und Prüfgas (P) enthaltenden Brennstabkapsel (3) unter Wasser mit einer Vorrichtung (1) nach einem der vorherigen Ansprüche, wobei zumindest eine Brennstabkapsel (3) in ein in einem gefluteten Becken (5) einer nuklearen Anlage abgesenktes Testbehältnis (4) eingebracht wird, **dadurch gekennzeichnet, dass** ein das aus der Brennstabkapsel (3) in das Testbehältnis (4) diffundierte Prüfgas (P) enthaltender Gasstrom einem Massenspektrometer (14) zugeführt wird und mittels des Massenspektrometers (14) eine Konzentration des aus der Brennstabkapsel (3) in das Testbehältnis (4) diffundierten Prüfgases (P) im Gasstrom zur Ermittlung einer Leckrate erfasst wird.

11. Verfahren nach Anspruch 10, **dadurch gekennzeichnet, dass** die zumindest eine Brennstabkapsel (3) unter Wasser in das Testbehältnis (4) eingebracht wird und das in das Testbehältnis (4) eingedrungene Wasser durch ein Spülgas ersetzt wird, wobei das Spülgas insbesondere für eine vorgebbare Zeitspanne im Testbehältnis (4) verbleibt, bevor der das Spülgas und das aus der Brennstabkapsel (3) hinaus diffundierte Prüfgas (P) enthaltende Gasstrom dem Massespektrometer (14) zugeführt wird.

12. Verfahren nach einem der Ansprüche 10 oder 11, **dadurch gekennzeichnet, dass** das Testbehältnis (4) zur Erzeugung des Gasstroms mit Wasser aus dem Becken (5) geflutet wird und/oder der Gasstrom an einer Entnahmestelle (13) dem Massespektrometer (14) zugeführt wird und ein Volumenstrom des Gasstroms derart geregelt wird, dass an der Entnahmestelle (13) ein konstanter Druck vorherrscht.

13. Verfahren nach einem der Ansprüche 10 bis 12, **dadurch gekennzeichnet, dass** der Entnahmestelle (13) ein Spülgas oder Prüfgas beinhaltendes Gasgemisch in einem vorgegebenen Mischungsverhältnis kontrolliert zugeführt wird.

14. Verfahren nach einem der Ansprüche 10 bis 13, **dadurch gekennzeichnet, dass** Komponenten der Vorrichtung (1), insbesondere Leitungen (12, 16, 17, 18) und/oder Leitungsabschnitte (11), die außerhalb des Beckens (5) angeordnet sind, zumindest abschnittsweise beheizt werden.

15. Verfahren nach einem der Ansprüche 10 bis 14, **dadurch gekennzeichnet, dass** als Prüfgas ein Inertgas, insbesondere Argon, verwendet wird.

## Claims

1. Device (1) designed for carrying out a leak test under water on a fuel rod capsule (3) containing at least one fuel rod (2) and test gas (P), comprising a test vessel (4) formed for receiving at least one fuel rod capsule (3), said vessel being able to be lowered into a basin (5) flooded with water of a nuclear plant, **characterised in that** a mass spectrometer (14) is fluidically connected to an inside of the test vessel (4) in such a way that a gas flow can be supplied to the mass spectrometer (14) for determining a concentration of the test gas (P) diffused from the fuel rod capsule (3) into the test vessel (4).

2. Device (1) according to claim 1, **characterised in that** argon is provided as the test gas (P), and the mass spectrometer (14) determines the concentration of the argon diffused out of the fuel rod capsule (3).

3. Device (1) according to claim 1 or 2, **characterised in that** the test vessel (4) can be evacuated in such a way that an internal pressure reduced in comparison to a hydrostatic pressure caused by the water surrounding the test vessel (4) can be adjusted inside the test vessel (4).

4. Device (1) according to one of the preceding claims, **characterised in that** the test vessel (4) has a connection device (8) to the inside of the basin (5) on a lower end.

5. Device (1) according to claim 4, **characterised in that** the connection device (8) lies in the basin (5) at a depth below the surface of the water, and an upper end of the test vessel (4) is fluidically connected to a first reservoir (30), in which a backflushing gas can be stockpiled under pressure, which is greater than the hydrostatic pressure of the surrounding water corresponding to the depth of the connection device (8), wherein the first reservoir (30) is fluidically connected, in particular, to a withdrawal point (13) of the mass spectrometer (14) and/or the withdrawal point (13) of the mass spectrometer (14) is fluidically connected, in particular, to a second reservoir (31), in which test gas (P) can be stockpiled under pressure, and, in particular, at least one volume regulating valve (22, 23, 25) is arranged between the withdrawal point (13) and the first reservoir (30) and/or between the withdrawal point (13) and the second reservoir (31).

6. Device (1) according to one of claims 4 or 5, **characterised in that** the inside of the test vessel (5) is fluidically connected to a withdrawal point (13) of the mass spectrometer (14) on the upper end in such a way that a gas column present in the test vessel (4) can be conveyed by introducing water through the connection device (8) arranged on the lower end of the test vessel for the withdrawal point (13).

7. Device (1) according to one of the preceding claims, **characterised in that** a volume flow of the gas flow supplied to the withdrawal point (13) of the mass spectrometer (14) can be changed by means of a setting device, in particular by means of at least one further volume regulating valve (25) or a vacuum pump (42), wherein the setting device is connected, in particular, to a pressure sensor (20) for measuring the pressure at the withdrawal point.

8. Device (1) according to one of the preceding claims, **characterised in that** the at least one fuel rod capsule (3) can be inserted into the test vessel (4) via an opening (6) that can be sealed and is arranged on one side.

9. Device (1) according to one of the preceding claims, **characterised in that** components of the device (1), in particular lines (12, 16, 17, 18) and/or line sections (11), which are arranged outside the basin, at least sectionally have heat-blocking insulation (28) and can be heated at least sectionally, in particular by means of a heating device.

10. Method for carrying out a leak test under water on a fuel rod capsule (3) containing at least one fuel rod (2) and test gas (P) using a device (1) according to one of the preceding claims, wherein at least one fuel rod capsule (3) is introduced into a test vessel (4) lowered into a basin (5) flooded with water of a nuclear plant, **characterised in that** a gas flow containing test gas (P) diffused out of the fuel rod capsule (3) into the test vessel (4) is supplied to a mass spectrometer (14), and a concentration of the test gas (P) diffused out of the fuel rod capsule (3) into the test vessel (4) in the gas flow is determined for ascertaining a leak rate by means of the mass spectrometer (14).

11. Method according to claim 10, **characterised in that** the at least one fuel rod capsule (3) is introduced into the test vessel (4) under water, and the water permeating into the test vessel (4) is replaced by a backflushing gas, wherein the backflushing gas remains in the test vessel (4), in particular, for a predeterminable timeframe before the gas flow containing the backflushing gas and the test gas (P) diffused out of the fuel rod capsule (3) is supplied to the mass spectrometer (14).

12. Method according to one of claims 10 or 11, **characterised in that** the test vessel (4) is flooded with water from the basin (5) for generating the gas flow and/or the gas flow is supplied to the mass spectrometer (14) at a withdrawal point (13), and a volume flow of the gas flow is regulated in such a way that there is a prevailing constant pressure at the withdrawal point (13).

13. Method according to one of claims 10 to 12, **characterised in that** a gas mixture containing backflushing gas or test gas is supplied to the withdrawal point (13) in a controlled manner in a predetermined mix ratio.

14. Method according to one of claims 10 to 13, **characterised in that** components of the device (1), in particular lines (12, 16, 17, 18) and/or line sections (11), which are arranged outside the basin (5), are heated at least sectionally.

15. Method according to one of claims 10 to 14, **characterised in that** an inert gas, in particular argon, is used as the test gas.

## Revendications

1. Dispositif (1) configuré pour mettre en oeuvre un contrôle d'étanchéité au niveau d'une capsule de barres de combustible (3) contenant au moins une barre de combustible (2) et du gaz de contrôle (P) sous l'eau, comprenant un récipient de test (4) réalisé pour recevoir au moins une capsule de barres de combustible (3), lequel peut être abaissé dans un bassin (5) rempli d'eau d'une centrale nucléaire, **caractérisé en ce qu'**un spectromètre de masse (14) est relié de manière fluidique à un espace intérieur du récipient de test (4) de telle manière qu'un flux de gaz servant à détecter une concentration du gaz de contrôle (P) diffusé depuis la capsule de barres de combustible (3) dans le récipient de test (4) peut être amené au spectromètre de masse (14).

2. Dispositif (1) selon la revendication 1, **caractérisé en ce que** de l'argon est prévu en tant que gaz de contrôle (P) et le spectromètre de masse (14) détecte la concentration de l'argon diffus depuis la capsule de barres de combustible (3).

3. Dispositif (1) selon la revendication 1 ou 2, **caractérisé en ce que** le vide peut être réalisé dans le récipient de test (4) de telle manière qu'une pression intérieure réduite par rapport à une pression hydrostatique provoquée par l'eau entourant le récipient de test (4) peut être réglée dans l'espace intérieur du récipient de test (4).

4. Dispositif (1) selon l'une quelconque des revendications précédentes, **caractérisé en ce que** le récipient de test (4) présente au niveau d'une extrémité inférieure un système de liaison (8) avec l'espace intérieur du bassin (5).

5. Dispositif (1) selon la revendication 4, **caractérisé en ce que** le système de liaison (8) dans le bassin (5) se situe à une profondeur sous une surface de l'eau et une extrémité supérieure du récipient de test (4) est reliée de manière fluidique à un premier réservoir (30), dans lequel un gaz de rinçage peut être stocké sous une pression, qui est supérieure à la pression hydrostatique, correspondant à la profondeur du système de liaison (8), de l'eau environnante, dans lequel le premier réservoir (30) est relié de manière fluidique en particulier à un emplacement de prélèvement (13) du spectromètre de masse (14) et/ou l'emplacement de prélèvement (13) du spectromètre de masse (14) est relié de manière fluidique en particulier à un deuxième réservoir (31), dans lequel du gaz de contrôle (P) peut être stocké sous pression et en particulier au moins une soupape de régulation de volume (22, 23, 25) est disposée entre l'emplacement de prélèvement (13) et le premier réservoir (30) et/ou entre l'emplacement de prélèvement (13) et le deuxième réservoir (31).

6. Dispositif (1) selon l'une quelconque des revendications 4 ou 5, **caractérisé en ce que** l'espace intérieur du récipient de test (5) est relié de manière fluidique au niveau de l'extrémité supérieure à un emplacement de prélèvement (13) du spectromètre de masse (14) de telle manière qu'une colonne de gaz présente dans le récipient de test (4) peut être transportée du fait de l'introduction d'eau à travers le système de liaison (8) disposé au niveau de l'extrémité inférieure du récipient de test vers l'emplacement de prélèvement (13).

7. Dispositif (1) selon l'une quelconque des revendications précédentes, **caractérisé en ce qu'**un flux volumique du flux de gaz amené à l'emplacement de prélèvement (13) du spectromètre de masse (14) peut être modifié au moyen d'un système de réglage, en particulier au moyen d'au moins une autre soupape de régulation de soupape (25) ou d'une pompe à vide (42), dans lequel le système de réglage est relié en particulier à un capteur de pression (20) servant à mesurer la pression au niveau de l'emplacement de prélèvement.

8. Dispositif (1) selon l'une quelconque des revendications précédentes, **caractérisé en ce que** l'au moins une capsule de barres de combustible (3) peut être introduite dans le récipient de test (4) par l'intermédiaire d'une ouverture (6) pouvant être fermée disposée du côté d'une extrémité.

9. Dispositif (1) selon l'une quelconque des revendications précédentes, **caractérisé en ce que** des composants du dispositif (1), en particulier des conduits (12, 16, 17, 18) et/ou des tronçons de conduit (11), qui sont disposés à l'extérieur du bassin, présentent au moins par endroits une isolation thermique (28) et peuvent être réchauffés au moins par endroits en particulier au moyen d'un système de chauffage.

10. Procédé servant à mettre en oeuvre un contrôle d'étanchéité au niveau d'une capsule de barres de combustible (3) contenant au moins une barre de combustible (2) et du gaz de contrôle (P) sous l'eau avec un dispositif (1) selon l'une quelconque des revendications précédentes, dans lequel au moins une capsule de barres de combustible (3) est introduite dans un récipient de test (4) abaissé dans un bassin (5) rempli d'une centrale nucléaire, **caractérisé en ce qu'**un flux de gaz contenant le gaz de contrôle (P) diffusé depuis la capsule de barres de combustible (3) dans le récipient de test (4) est amené à un spectromètre de masse (14) et une concentration du gaz de contrôle (P) diffusé depuis la capsule de barres de combustible (3) dans le récipient de test (4) est détectée dans le flux de gaz pour déterminer un taux de fuite au moyen du spectromètre de masse (14).

11. Procédé selon la revendication 10, **caractérisé en ce que** l'au moins une capsule de barres de combustible (3) est introduite sous l'eau dans le récipient de test (4) et l'eau entrée dans le récipient de test (4) est remplacée par un gaz de rinçage, dans lequel le gaz de rinçage reste en particulier pour une période de temps pouvant être prédéfinie dans le récipient de test (4) avant que le flux de gaz contenant le gaz de rinçage et le gaz de contrôle (P) diffusé depuis la capsule de barres de combustible (3) ne soit amené au spectromètre de masse (14).

12. Procédé selon l'une quelconque des revendications 10 ou 11, **caractérisé en ce que** le récipient de test (4) est rempli, pour générer le flux de gaz, d'eau provenant du bassin (5) et/ou le flux de gaz est amené au niveau d'un emplacement de prélèvement (13) au spectromètre de masse (14) et un flux volumique du flux de gaz est régulé de telle manière qu'une pression constante prédomine au niveau de l'emplacement de prélèvement (13).

13. Procédé selon l'une quelconque des revendications 10 à 12, **caractérisé en ce qu'**un mélange de gaz contenant du gaz de rinçage ou du gaz de contrôle est amené de manière contrôlée selon un rapport de mélange prédéfini à l'emplacement de prélèvement (13).

14. Procédé selon l'une quelconque des revendications 10 à 13, **caractérisé en ce que** des composants du dispositif (1), en particulier des conduits (12, 16, 17, 18) et/ou des tronçons de conduit (11), qui sont disposés à l'extérieur du bassin (5), sont réchauffés au moins par endroits.

15. Procédé selon l'une quelconque des revendications 10 à 14, **caractérisé en ce qu'**un gaz inerte, en particulier de l'argon, est utilisé en tant que gaz de contrôle.
